# FASCICULE DE BREVET EUROPEEN

(11) **EP 2 462 718 B1**
(45) Date de publication et mention de la délivrance du brevet: **29.05.2013**
(21) Numéro de dépôt: 10740628.2
(22) Date de dépôt: 04.08.2010
(51) Int. Cl.: H04L 9/08

(54) **Procédé de génération de demi-clés cryptographiques et système associé**
Verfahren zur Erzeugung von kryptografischen Halbschlüsseln und zugehöriges System
Method for generating cryptographic half-keys and associated system

(30) Priorité: 04.08.2009 FR 0903845
(43) Date de publication de la demande: 13.06.2012
(73) Titulaire: Thales, 92200 Neuilly Sur Seine (FR)
(72) Inventeur: DUPREZ, Adrien, F-92704 Colombes Cedex (FR); GOMPEL, Paul, 75016 PARIS (FR); PAINCHAULT, Philippe, F-92704 Colombes Cedex (FR)
(74) Mandataire: Labatte, Laurent
(86) Numéro de dépôt international: PCT/EP2010/061350
(87) Numéro de publication internationale: WO 2011/015600

(56) Documents cités:
- US-A1- 2007 248 232
- US-B1- 6 584 566
- MENEZES, VANSTONE, OORSCHOT: "Handbook of Applied Cryptography", 1997, CRC PRESS LLC, USA, XP002587353, page 524 - page 527

## Description

La présente invention concerne un procédé de génération de demi-clés cryptographiques et son système de mise en oeuvre. Elle s'applique notamment à la création de plusieurs clés d'accès à un équipement sécurisé.

Le document XP002587353 se compose d'une sélection d'extraits du "Handbook of Applied Cryptography" (1997, Menezes, Vanstone, Oorschot) et présente les mécanismes théoriques de partage de secret par génération de M fractions de secret attribuées à des utilisateurs différents ("secret sharing").

Un équipement prévu pour manipuler des informations sensibles peut être sécurisé en chiffrant ces informations à l'aide d'une clé cryptographique composée de plusieurs éléments distincts. Une telle clé est ainsi classiquement définie par un couple de demi-clés stockées séparément l'une de l'autre. Par exemple, une première demi-clé est stockée au sein de l'équipement sécurisé tandis qu'une deuxième demi-clé est enregistrée sur un support externe à l'équipement. Lorsque ce support externe est connecté à l'équipement, les deux demi-clés sont combinées pour former la clé d'accès à l'équipement et ainsi permettre son utilisation. Un exemple d'un tel procédé de sécurisation est désigné par l'acronyme anglo-saxon CIK pour « Crypto Ignition Key ». L'acronyme CIK désigne de manière générale le principe d'utilisation d'une clé cryptographique permettant le démarrage d'un équipement cryptographique. Dans un souci de simplification, un support d'enregistrement externe à l'équipement sécurisé et apte à mémoriser une demi-clé CIK sera désigné par l'expression « bouchon CIK ». Un bouchon CIK peut être attribué à un utilisateur particulier ou à un groupe d'utilisateurs et ainsi permettre, en plus du déverrouillage de l'équipement sécurisé, d'identifier un utilisateur, et d'identifier son rôle (administrateur, agent de maintenance, opérateur, ...).

Classiquement, l'initialisation complète d'un bouchon CIK nécessite sa connexion à l'équipement, la création d'un couple de demi-clés dont l'une est stockée uniquement sur l'équipement et dont l'autre est transmise et enregistrée sur le bouchon CIK, puis une phase de configuration, par exemple des droits d'accès pour l'utilisateur auquel le bouchon CIK est destiné. Aussi, lorsque plusieurs utilisateurs sont amenés à utiliser un équipement sécurisé, il devient nécessaire d'initialiser plusieurs bouchons CIK, par exemple un bouchon par utilisateur, avec parfois des configurations différentes d'un bouchon CIK à l'autre. L'initialisation d'une série de bouchons CIK requiert donc l'exécution de multiples cycles de connexion / configuration / déconnexion qui rendent les manipulations longues et répétitives, et par conséquent également sources d'erreurs, plus particulièrement lorsque l'équipement ne dispose d'aucun moyen ergonomique pour lui transmettre des instructions, par exemple aucune interface homme-machine, aucun écran, aucun clavier et aucune souris. De plus, l'équipement peut être placé dans un espace exigu, par exemple embarqué dans un véhicule ou un aéronef, ce qui rend difficilement accessibles les connecteurs de l'équipement prévus pour accueillir les bouchons, compliquant encore davantage la tâche de l'opérateur chargé de l'initialisation, et immobilisant durant une certaine période le véhicule.

Une première solution pour simplifier l'initialisation de ces supports consiste à installer sur l'équipement à sécuriser une interface graphique et des moyens d'interactions avec un utilisateur tels que, par exemple, un clavier. Toutefois, les équipements à sécuriser ne se prêtent pas toujours à la mise en place d'une interface graphique ni à la connexion de moyens d'entrée/sortie pour utilisateur. Par exemple, un poste embarqué de radiocommunications chiffrées n'est pas prévu pour accueillir de telles évolutions. De plus, un clavier peut ne pas être utilisable dans certains cadres d'emploi (notamment avec l'usage de gants ou de moufles). De même, par exemple, un écran rétro-éclairé ne peut pas être employé de nuit lorsqu'on souhaite maintenir une certaine discrétion d'utilisation.

Une deuxième solution pour simplifier la procédure d'initialisation des bouchons CIK est d'utiliser un système de mise à la clé générique. Cependant, ce type de système est très complexe à mettre en oeuvre, donc très coûteux.

Un but de l'invention est de proposer une méthode peu coûteuse permettant d'initialiser aisément des bouchons CIK, en particulier lorsque ceux-ci sont employés sur des équipements ne disposant pas d'une interface homme-machine ergonomique. A cet effet, l'invention a pour objet un procédé de génération de n couples (Kⁱ₁, Kⁱ₂), 1≤i≤n, de demi-clés cryptographiques, chacun desdits couples permettant de reconstruire une clé d'accès K_{PL} propre à un équipement sécurisé, ledit procédé étant caractérisé en ce qu'il comprend au moins les étapes suivantes :
- à partir d'un centre de gestion distinct dudit équipement, générer et mémoriser une première série de n demi-clés Kⁱ₁ sur un support d'enregistrement ;
- alimenter l'équipement avec ledit support d'enregistrement pour générer, à partir de ladite clé d'accès K_{PL} et des n demi-clés Kⁱ₁ mémorisées sur ledit support, une seconde série de n demi-clés Kⁱ₂ permettant de former lesdits n couples (Kⁱ₁, Kⁱ₂).

L'équipement peut ainsi être initialisé par n couples de demi-clés différentes. En effet, l'association des demi-clés appartenant à chacun des n couples (Kⁱ₁, Kⁱ₂) formés avec les deux séries de demi-clés permettent de reconstruire la clé locale K_{PL}.

Selon une mise en oeuvre du procédé de génération de couples de demi-clés cryptographiques selon l'invention, un fichier de commandes est produit par le centre de gestion, ledit fichier de commandes étant mémorisé sur le support d'enregistrement, ledit fichier contenant des instructions à lire par l'équipement pour commander la génération de la seconde série de demi-clés Kⁱ₂ à l'équipement sécurisé. Un tel support d'enregistrement est plus communément désigné par le terme anglo-saxon « Fill Gun ».

Selon une mise en oeuvre du procédé de génération de couples de demi-clés cryptographiques selon l'invention, l'équipement ne dispose d'aucun moyen d'entrée ergonomique pour permettre à un utilisateur de transmettre des instructions. Par exemple, aucun clavier et aucune souris ne peuvent être installés sur ledit équipement.

Le centre de gestion peut être un ordinateur personnel relié à un banc de connecteurs adaptés à la connexion d'un support mémorisant une demi-clé Kⁱ₁, ledit ordinateur étant pourvu d'un logiciel de génération de demi-clés.

Selon une mise en oeuvre du procédé selon l'invention, chacun des supports mémorisant une ou plusieurs demi-clés Kⁱ₁ est attribué à un utilisateur ou un groupe d'utilisateurs de l'équipement sécurisé, le procédé comprenant une étape de définition de droits d'accès pour chacun desdits supports, via une interface graphique installée sur le centre de gestion.

Chacune des n demi-clés Kⁱ₁ de la première série peut être mémorisée sur un support amovible externe à l'équipement, les n demi-clés Kⁱ₂ de la seconde série étant enregistrées sur l'équipement. Le support amovible contenant une demi-clé Kⁱ₁ peut être associé à un utilisateur, de sorte que chaque utilisateur habilité à accéder à l'équipement sécurisé possède sa propre demi-clé d'accès.

L'équipement peut être un système de radiocommunications chiffrées, un équipement doté de moyens cryptographiques ou plus généralement, tout système nécessitant la protection de certaines données sensibles.

L'invention a également pour objet un système pour générer n couples (Kⁱ₁, Kⁱ₂), 1≤i≤n, de demi-clés cryptographiques, chacun desdits couples permettant de reconstruire une clé d'accès K_{PL} propre à un équipement sécurisé, le système comprenant un centre de gestion pourvu d'un banc de connecteurs aptes à recevoir des supports amovibles adaptés à l'enregistrement d'une ou plusieurs demi-clés Kⁱ₁, le système comprenant un support d'enregistrement à connecter sur l'équipement sécurisé et adapté à la mise en oeuvre du procédé tel que décrit plus haut.

Contrairement à un procédé classique d'initialisation au cours duquel les deux demi-clés d'un couple (Kⁱ₁, Kⁱ₂) sont créées en même temps à partir de l'équipement sécurisé, le procédé selon l'invention dissocie la création de ces deux demi-clés Kⁱ₁, Kⁱ₂ pourtant étroitement liées mathématiquement.

D'autres caractéristiques apparaîtront à la lecture de la description détaillée donnée à titre d'exemple et non limitative qui suit faite en regard de dessins annexés qui représentent :
- la figure 1, des éléments mis en oeuvre lors de l'exécution d'un procédé selon l'invention,
- la figure 2, un synoptique illustrant les étapes d'un procédé selon l'invention.

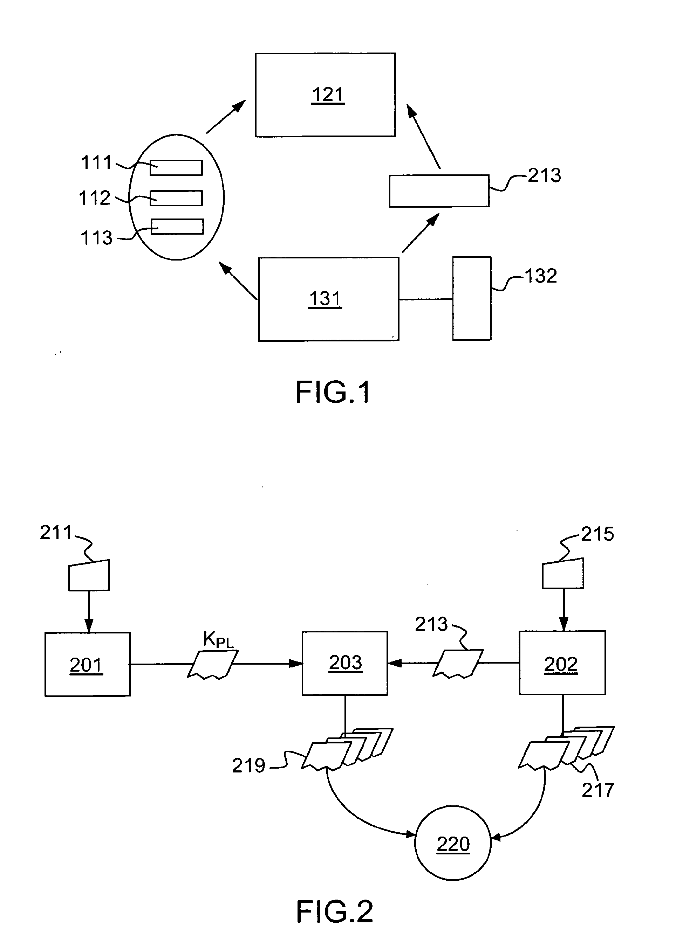

La figure 1 présente des éléments mis en oeuvre lors de l'exécution d'un procédé selon l'invention. Le procédé s'applique à l'initialisation de supports 111, 112, 113, dans l'exemple des bouchons CIK, aptes à se connecter sur un équipement sécurisé 121 pour permettre son déverrouillage. Pour effectuer cette initialisation, un dispositif 213 d'injection de fichiers dans l'équipement 121 et un centre de gestion 131 sont utilisés. Comme expliqué plus loin, le centre de gestion 131 est relié à un banc 132 de connecteurs aptes à recevoir les supports 111, 112, 113.

La figure 2 présente un synoptique illustrant les étapes d'un procédé selon l'invention. L'exemple développé dans la figure concerne la création de n couples de demi-clés permettant, par exemple, à n utilisateurs différents d'accéder à un équipement sécurisé.

Lors d'une première étape 201, un bouchon CIK 211 avec des droits d'administrateur est connecté à un équipement sécurisé. Cet équipement sécurisé est par exemple un terminal de radiocommunications haute sécurité, un chiffreur IP, un système de chiffrement de fichiers. L'équipement est inutilisable tant qu'une clé cryptographique K_{PL} d'accès n'a pas été reconstruite. Il est à noter que pour exécuter le procédé selon l'invention, il est donc nécessaire de disposer préalablement d'un bouchon CIK déjà initialisé. Autrement dit, il a fallu d'abord effectuer une initialisation classique d'un bouchon CIK - celui de l'administrateur, dans l'exemple - afin de pouvoir initialiser ensuite les autres bouchons CIK.

La connexion du bouchon CIK 211 à l'équipement permet donc de reconstruire la clé cryptographique d'accès K_{PL} à cet équipement, par combinaison de la demi-clé présente sur le CIK 211 et de la demi-clé associée présente sur l'équipement. L'équipement reste donc utilisable tant que le bouchon CIK 211 demeure connecté à l'équipement. Cette connexion peut être réalisée par branchement physique du bouchon sur l'équipement ou par tout autre moyen.

Lors d'une deuxième étape 202, une personne qualifiée, par exemple un administrateur, exploite un centre de gestion pour créer n demi-clés, chacune destinée à un bouchon CIK différent, les bouchons CIK pouvant déverrouiller le même équipement ou des équipements différents. Le centre de gestion est, par exemple, un ordinateur personnel, avantageusement placé dans un environnement ergonomique et sécurisé, muni d'une interface graphique permettant à l'administrateur de créer un nouveau numéro d'utilisateur habilité à posséder un bouchon CIK pour accéder à l'équipement, ladite interface graphique permettant également, par exemple, d'attribuer des droits plus ou moins étendus aux futurs utilisateurs des bouchons CIK. L'ordinateur personnel est relié à des moyens de connexion pour bouchons CIK, par exemple, un banc comprenant une dizaine de connecteurs.

Tout d'abord, n bouchons CIK vierges à initialiser sont donc connectés à un banc, lequel est relié à un ordinateur personnel. En outre, un dispositif 213 d'injection de fichiers dans l'équipement est également connecté à l'ordinateur, ce type de dispositif étant parfois désigné par le terme anglo-saxon « Fill Gun ». Par exemple, le dispositif 213 est relié à l'ordinateur et à l'équipement par des interfaces standard, de type RS232, RS485, USB. Ensuite, l'administrateur 215 crée, par exemple via une interface homme-machine exécutée par l'ordinateur, un nombre n de bouchons à considérer et un nombre p d'équipements sécurisés auxquels un accès est requis. L'ordinateur crée alors n demi-clés Kⁱ₁, 1≤i≤n, une pour chaque bouchon CIK à initialiser. Chacune de ces demi-clés Kⁱ₁ est transmise à un bouchon CIK 217 connecté au banc et les n demi-clés Kⁱ₁ sont transmises au dispositif 213 d'injection de fichiers. L'administrateur 215 peut également attribuer des droits d'accès différents pour chaque bouchon CIK. Enfin, un fichier de commandes est créé sur le dispositif 213 d'injection, ce fichier contenant des instructions compréhensibles par l'équipement sécurisé pour compléter l'initialisation, comme expliqué plus loin, lors d'une troisième étape 203 du procédé.

A l'issue de la deuxième étape 202, chaque bouchon CIK 217 enregistre un identificateur de l'équipement auquel il permet d'accéder et sa demi-clé Kⁱ₁, et le dispositif 213 d'injection de fichiers contient, un fichier de commandes et, pour chaque association entre un bouchon CIK et l'équipement auquel il permet l'accès, la demi-clé Kⁱ₁ du bouchon CIK et les droits d'accès associés à ce bouchon CIK.

Un même bouchon CIK peut être utilisé pour plusieurs équipements différents ; dans ce cas, plusieurs demi-clés différentes sont enregistrées sur un même bouchon CIK.

Par ailleurs, la première étape 201 et la deuxième étape 202 peuvent être permutées, sans préjudice au résultat obtenu par le procédé selon l'invention.

Lors d'une troisième étape 203, le dispositif 213 d'injection de fichiers est connecté à l'équipement sécurisé. Le fichier de commandes généré lors de la deuxième étape 202 est lu par l'équipement et ce dernier, à partir de la clé cryptographique d'accès K_{PL} et des n demi-clés Kⁱ₁ contenues dans le dispositif 213 d'injection de fichiers, produit une deuxième série 219 de n demi-clés Kⁱ₂ à stocker sur l'équipement sécurisé. A chaque demi-clé Kⁱ₁ de la première série 217, correspond une demi-clé Kⁱ₂ de la deuxième série 219. Autrement dit, n couples de demi-clés (Kⁱ₁, Kⁱ₂) sont formés, chacun de ces couples permettant de reconstruire la clé cryptographique d'accès K_{PL} à l'équipement, les demi-clés de chaque couple étant stockées sur des supports distincts (équipement et bouchon CIK). De préférence, une fois qu'une demi-clé Kⁱ₂ de la deuxième série 219 a été créée, la demi-clé correspondante Kⁱ₁ dans la première série 217 est effacée du dispositif 213 d'injection de fichiers. Par ailleurs, les numéros d'utilisateur présents sur le dispositif 213 d'injection de fichiers ainsi que les droits associés à ces utilisateurs sont également transmis à l'équipement. L'équipement interprète ensuite ce que représentent ces niveaux de droit.

A l'issue de cette troisième étape 203, l'équipement sécurisé est prêt 220 à être utilisé via n'importe lequel des bouchons CIK initialisés. Lorsqu'un utilisateur connecte son bouchon CIK à l'équipement verrouillé, l'équipement reconstruit la clé cryptographique d'accès K_{PL} et octroie les privilèges initialement configurés pour cet utilisateur.

Hormis la connexion préalable indispensable à l'initialisation d'un bouchon CIK 211 administrateur, une seule connexion à l'équipement a donc été nécessaire (celle du dispositif 213 d'injection de fichiers), lorsque l'état de la technique requérait n connexions de bouchons CIK à un équipement pour générer n demi-clés. Ainsi, lorsque n≥2, les manipulations longues et répétitives sont évitées, ce qui diminue le risque d'erreur dans la génération des demi-clés.

Lorsqu'un bouchon CIK est perdu, il faut pouvoir le désactiver au sein de l'équipement, ce qui, classiquement, nécessite de préciser à l'équipement quel bouchon CIK est perdu, et donc d'avoir des identifiants de bouchon. Or pour que l'équipement puisse connaître ces identifiants, il faut pouvoir les saisir et donc que l'équipement dispose par exemple d'un clavier.

Le procédé selon l'invention permet l'utilisation d'un fichier de commandes qui est par la suite injecté dans l'équipement pour lui ordonner de supprimer tous les bouchons CIK, ou de supprimer tous les bouchons sauf celui qui est connecté. Ainsi, nul besoin d'identifiant de bouchon CIK, ni de clavier.

Le procédé selon l'invention présente notamment l'avantage de réduire les menaces liées à une initialisation erronée de l'équipement, tout en conservant un haut niveau de sécurité.

Un autre avantage du procédé selon l'invention est qu'elle est évolutive, puisque la procédure mise en place au niveau du centre de gestion peut être perfectionnée, du fait des possibilités d'adaptation.

## Revendications

1. Procédé de génération de n couples (Kⁱ₁, Kⁱ₂), 1≤i≤n, de demi-clés cryptographiques, chacun desdits couples permettant de reconstruire une clé d'accès K_{PL} propre à un équipement sécurisé, ledit procédé étant **caractérisé en ce qu'**il comprend au moins les étapes suivantes :
- a partir d'un centre de gestion (131) distinct dudit équipement (121), générer (202) et mémoriser une première série (217) de n demi-clés Kⁱ₁ sur un support d'enregistrement (213) ;
- alimenter (203) l'équipement avec ledit support d'enregistrement (213) pour générer, à partir de ladite clé d'accès K_{PL} et des n demi-clés Kⁱ₁ mémorisées sur ledit support (213), une seconde série (219) de n demi-clés Kⁱ₂ permettant de former lesdits n couples (Kⁱ₁, Kⁱ₂).

2. Procédé de génération de couples de demi-clés cryptographiques selon la revendication 1, **caractérisé en ce qu'**un fichier de commandes est produit par le centre de gestion (131), ledit fichier de commandes étant mémorisé sur le support d'enregistrement (213), ledit fichier contenant des instructions à lire par l'équipement pour commander la génération de la seconde série de demi-clés Kⁱ₂ à l'équipement sécurisé.

3. Procédé de génération de couples de demi-clés cryptographiques selon la revendication 1 ou 2, **caractérisé en ce que** l'équipement (121) ne dispose d'aucun moyen d'entrée ergonomique pour permettre à un utilisateur de transmettre des instructions.

4. Procédé de génération de couples de demi-clés cryptographiques selon l'une des revendications précédentes, **caractérisé en ce que** le centre de gestion (131) est un ordinateur personnel relié à un banc (132) de connecteurs adaptés à la connexion d'un support (111, 112, 113) mémorisant une demi-clé Kⁱ₁, ledit ordinateur étant pourvu d'un logiciel de génération de demi-clés.

5. Procédé de génération de couples de demi-clés cryptographiques selon la revendication 4, chacun desdits supports (111, 112, 113) support mémorisant une ou plusieurs demi-clés Kⁱ₁ étant attribué à un utilisateur ou un groupe d'utilisateurs de l'équipement sécurisé, le procédé étant **caractérisé en ce qu'**il comprend une étape de définition de droits d'accès pour chacun desdits supports (111, 112, 113), via une interface graphique installée sur le centre de gestion (131).

6. Procédé de génération de couples de demi-clés cryptographiques selon l'une des revendications 1 à 4 **caractérisé en ce que** chacune des n demi-clés Kⁱ₁ de la première série (217) est mémorisée sur un support (111, 112, 113) amovible externe à l'équipement (121), les n demi-clés Kⁱ₂ de la seconde série (219) étant enregistrées sur l'équipement.

7. Procédé selon l'une des revendications précédentes, **caractérisé en ce que** l'équipement (121) est un système de radiocommunications chiffrées ou un équipement doté de moyens cryptographiques.

8. Système pour générer n couples (Kⁱ₁, Kⁱ₂), 1≤i≤n, de demi-clés cryptographiques, chacun desdits couples permettant de reconstruire une clé d'accès K_{PL} propre à un équipement sécurisé, le système étant **caractérisé en ce qu'**il comprend un centre de gestion (131) pourvu d'un banc (132) de connecteurs aptes à recevoir des supports amovibles (111, 112, 113) adaptés à l'enregistrement d'une ou plusieurs demi-clés Kⁱ₁, le système comprenant un support d'enregistrement (213) à connecter sur l'équipement sécurisé et adapté à la mise en oeuvre du procédé selon l'une des revendications précédentes.

## Patentansprüche

1. Verfahren zur Erzeugung von n Paaren (Kⁱ₁, Kⁱ₂), 1 ≤ i ≤ n, kryptografischer Halbschlüssel, wobei jedes der Paare erlaubt, einen eigenen Zugriffsschlüssel K_{PL} einer gesicherten Ausrüstung zu rekonstruieren, wobei das Verfahren **dadurch gekennzeichnet ist, dass** es mindestens die folgenden Schritte umfasst:
- ausgehend von einem Verwaltungszentrum (131), das sich von der Ausrüstung (121) unterscheidet, Erzeugen (202) und Speichern einer ersten Reihe (217) von n Halbschlüsseln Kⁱ₁ auf einem Speichermedium (213),
- Versorgen (203) der Ausrüstung mit dem Speichermedium (213), um ausgehend von dem Zugangsschlüssel K_{PL} und den n Halbschlüsseln Kⁱ₁, die auf dem Medium (213) gespeichert sind, eine zweite Reihe (219) von n Halbschlüsseln Kⁱ₂ zu erzeugen, die es erlauben, die n Paare (Kⁱ₁, Kⁱ₂) zu bilden.

2. Verfahren zur Erzeugung von Paaren kryptografischer Halbschlüssel nach Anspruch 1, **dadurch gekennzeichnet, dass** von dem Verwaltungszentrum (131) eine Befehlsdatei produziert wird, wobei die Befehlsdatei auf dem Speichermedium (213) gespeichert ist, wobei die Datei Anweisungen enthält, die von der Ausrüstung gelesen werden müssen, um die Erzeugung der zweiten Reihe von Halbschlüsseln Kⁱ₂ für die gesicherte Ausrüstung zu steuern.

3. Verfahren zur Erzeugung von Paaren kryptografischer Halbschlüssel nach Anspruch 1 oder 2, **dadurch gekennzeichnet, dass** die Ausrüstung (121) über kein ergonomisches Eingangsmittel verfügt, um einem Benutzer die Übermittlung von Anweisungen zu erlauben.

4. Verfahren zur Erzeugung von Paaren kryptografischer Halbschlüssel nach einem der vorangehenden Ansprüche, **dadurch gekennzeichnet, dass** das Verwaltungszentrum (131) ein Personalcomputer ist, der mit einer Bank (132) von Verbindern verbunden ist, die für die Verbindung eines Mediums (111, 112, 113) geeignet sind, das einen Halbschlüssel Kᵢ¹ speichert, wobei der Computer mit einer Software für die Erzeugung von Halbschlüsseln ausgestattet ist.

5. Verfahren zur Erzeugung von Paaren kryptografischer Halbschlüssel nach Anspruch 4, wobei jedes der Medien (111, 112, 113), das einen oder mehrere Halbschlüssel Kⁱ₁ speichert, einem Benutzer oder einer Benutzergruppe der gesicherten Ausrüstung zugewiesen ist, wobei das Verfahren **dadurch gekennzeichnet ist, dass** es einen Schritt der Definition von Zugriffsrechten für jedes der Medien (111, 112, 113) über eine grafische Schnittstelle, die auf dem Verwaltungszentrum (131) installiert ist, umfasst.

6. Verfahren zur Erzeugung von Paaren kryptografischer Halbschlüssel nach einem der Ansprüche 1 bis 4, **dadurch gekennzeichnet, dass** jeder der n Halbschlüssel Kⁱ₁ der ersten Reihe (217) auf einem lösbaren Medium (111, 112, 113) außerhalb der Ausrüstung (121) gespeichert ist, wobei die n Halbschlüssel Kⁱ₂ der zweiten Reihe (219) in der Ausrüstung gespeichert sind.

7. Verfahren nach einem der vorangehenden Ansprüche, **dadurch gekennzeichnet, dass** die Ausrüstung (121) ein System chiffrierter Funkkommunikationen oder eine Ausrüstung ist, die mit kryptografischen Mitteln ausgestattet ist.

8. System zur Erzeugung von n Paaren (Kⁱ₁, Kⁱ₂), 1≤i≤n, kryptografischer Halbschlüssel, wobei jedes der Paare erlaubt, einen eigenen Zugangsschlüssel K_{PL} zu einer gesicherten Ausrüstung zu rekonstruieren, wobei das System **dadurch gekennzeichnet ist, dass** es ein Verwaltungszentrum (131) umfasst, das mit einer Bank (132) von Verbindern ausgestattet ist, die imstande sind, lösbare Medien (111, 112, 113) aufzunehmen, die zum Speichern von einem oder mehreren Halbschlüsseln Kⁱ₁ geeignet sind, wobei das System ein Speichermedium (213) aufweist, das mit der gesicherten Ausrüstung verbunden werden muss und für die Umsetzung des Verfahrens nach einem der vorangehenden Ansprüche geeignet ist.

## Claims

1. A method for generating n pairs (Kⁱ₁, Kⁱ₂), 1 ≤i ≤ n, of cryptographic half-keys, each of said pairs allowing the reconstruction of an access key K_{PL} that is specific to a secure item of equipment, said method being **characterised in that** it comprises at least the following steps:
- generating (202), from a management centre (131) that is distinct from said item of equipment (121), and storing a first series (217) of n half-keys Kⁱ₁ on a recording medium (213);
- supplying (203) said item of equipment with said recording medium (213) so as to generate, on the basis of said access key K_{PL} and the n half-keys Kⁱ₁ that are stored on said medium (213), a second series (219) of n half-keys Kⁱ₂ allowing the formation of said n pairs (Kⁱ₁, Kⁱ₂).

2. The method for generating pairs of cryptographic half-keys according to claim 1, **characterised in that** a commands file is produced by said management centre (131), said commands file being stored on said recording medium (213), said file containing instructions to be read by said item of equipment to control the generation of said second series of half-keys Kⁱ₂ on said secure item of equipment.

3. The method for generating pairs of cryptographic half-keys according to claim 1 or 2, **characterised in that** said item of equipment (121) does not have any ergonomic input means to allow a user to transmit instructions.

4. The method for generating pairs of cryptographic half-keys according to any one of the preceding claims, **characterised in that** said management centre (131) is a personal computer that is connected to a bank (132) of connectors that are designed for connecting a medium (111, 112, 113) storing a half-key Kⁱ₁, said computer being provided with software for generating half-keys.

5. The method for generating pairs of cryptographic half-keys according to claim 4, each of said mediums (111, 112, 113) storing one or more half-keys Kⁱ₁ being assigned to a user or a group of users of said secure item of equipment, said method being **characterised in that** it comprises a step of defining access rights for each of said mediums (111, 112, 113) via a graphic interface that is installed in said management centre (131).

6. The method for generating pairs of cryptographic half-keys according to any one of claims 1 to 4, **characterised in that** each of the n half-keys Kⁱ₁ of said first series (217) is stored on a removable medium (111, 112, 113) outside of said item of equipment (121), the n half-keys Kⁱ₂ of said second series (219) being stored on said item of equipment.

7. The method according to any one of the preceding claims, **characterised in that** said item of equipment (121) is an encrypted radio communications system or an item of equipment that is provided with cryptographic means.

8. A system for generating n pairs (Kⁱ₁, Kⁱ₂), 1 ≤i≤n, of cryptographic half-keys, each of said pairs allowing the reconstruction of an access key K_{PL} that is specific to a secure item of equipment, said system being **characterised in that** it comprises a management centre (131) that is provided with a bank (132) of connectors that are designed to receive removable mediums (111, 112, 113) that are designed to record one or more half-keys Kⁱ₁, said system comprising a recording medium (213) that is to be connected to said secure item of equipment and is designed to implement the method according to any one of the preceding claims.
